(19) Europäisches Patentamt
European Patent Office
Office européen des brevets

(11) **EP 4 470 970 A1**

(12) **EUROPEAN PATENT APPLICATION**
published in accordance with Art. 153(4) EPC

(43) Date of publication:
**04.12.2024   Bulletin 2024/49**

(21) Application number: **23745814.6**

(22) Date of filing: **04.01.2023**

(51) International Patent Classification (IPC):
**C01B 3/56** *(2006.01)*      **C01B 3/34** *(2006.01)*

(52) Cooperative Patent Classification (CPC):
**C01B 3/34; C01B 3/56;** Y02P 20/129; Y02P 20/133

(86) International application number:
**PCT/CN2023/070442**

(87) International publication number:
**WO 2023/142929 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **29.01.2022   CN 202210113288**

(71) Applicant: **Institute Of Engineering
Thermophysics,
Chinese Academy Of Sciences
Beijing 100190 (CN)**

(72) Inventors:
• HAO, Yong
  **Beijing 100190 (CN)**
• WANG, Hongsheng
  **Beijing 100190 (CN)**
• LING, Yunyi
  **Beijing 100190 (CN)**
• JIN, Hongguang
  **Beijing 100190 (CN)**
• LIU, Mingkai
  **Beijing 100190 (CN)**

(74) Representative: **Carpmaels & Ransford LLP
One Southampton Row
London WC1B 5HA (GB)**

(54) **METHANE REFORMING REACTION SYSTEM**

(57)      The present disclosure provides a methane reforming reaction system comprising: a reaction chamber (1), a hydrogen gas separation chamber (2) and a carbon dioxide separation chamber (3). The reaction chamber (1) is used for a methane reforming reaction between methane and steam; a hydrogen permeable membrane (4) is provided between the hydrogen gas separation chamber (2) and the reaction chamber (1) and a first outlet (6) is provided on the hydrogen gas separation chamber (2) for separating hydrogen gas produced in the reaction chamber (1); a carbon dioxide permeable membrane (5) is provided between the carbon dioxide separation chamber (3) and the reaction chamber (1) and a second outlet (7) is provided on the carbon dioxide separation chamber (3) for separating carbon dioxide produced in the reaction chamber (1); wherein the hydrogen gas in the hydrogen gas separation chamber (2) has a chemical potential less than that of the hydrogen gas in the reaction chamber (1) under a chemical equilibrium state of the methane reforming reaction; and the carbon dioxide in the carbon dioxide separation chamber (3) has a chemical potential less than that of the carbon dioxide in the reaction chamber (1) under the chemical equilibrium state of the methane reforming reaction.

Fig. 1

**Description**

## FIELD OF THE INVENTION

The present disclosure relates to the technical field of new energy, and particularly to a methane reforming reaction system.

## BACKGROUND OF THE INVENTION

As the consumption of traditional energy increases and the consequent environmental pollution becomes more serious, the renewable energy has increasingly attracted attention of countries and research institutes in the world. Hydrogen gas is an energy source with a very high energy density, and may be prepared by decomposing water which is extremely abundant on the earth, or may be prepared by reforming methane which is abundant in fossil energy source. Therefore, hydrogen gas has increasingly become a research hotspot as a clean energy. As compared to the traditional hydrogen production through water electrolysis and catalytic hydrogen production from chemical raw materials, the hydrogen production through methane reforming chemical reaction system with products separated may use nuclear energy, industrial waste heat or new energy such as solar energy as an energy source, thereby reducing the use of electric energy and fossil energy while obtaining a pure product of carbon dioxide, which is of significant importance for achieving sustainable development of energy.

Taking advantage of the characteristics of reduced Gibbs free energy of the methane reforming reaction at a medium temperature and the fact that hydrogen permeable membrane materials only conduct hydrogen ions, several methods for preparing hydrogen gas through methane reforming with a membrane material have been developed. However, in most of currently used methods, a hydrogen permeable membrane is used at medium and high temperatures to separate hydrogen gas obtained after methane reforming from the system, thereby recovering the hydrogen gas. However, such methods result in a too high concentration of carbon dioxide in the hydrogen permeable membrane tube, which will inhibit further progress of the methane reforming reaction, thereby reducing the conversion of methane. The combined effect of these factors results in limited methane reforming production of methane reforming devices for hydrogen production in prior art, low hydrogen production efficiency, and very low conversion efficiency of the system from thermal energy to chemical energy.

## SUMMARY OF THE INVENTION

In view of this, the present disclosure provides a methane reforming reaction system to at least partially solve the technical problem.

In an aspect, the present disclosure provides a methane reforming reaction system comprising: a reaction chamber, a hydrogen gas separation chamber and a carbon dioxide separation chamber. The reaction chamber is used for a methane reforming reaction between methane and steam; a hydrogen permeable membrane is provided between the hydrogen gas separation chamber and the reaction chamber, and a first outlet is provided on the hydrogen gas separation chamber for separating hydrogen gas produced in the reaction chamber; a carbon dioxide permeable membrane is provided between the carbon dioxide separation chamber and the reaction chamber, and a second outlet is provided on the carbon dioxide separation chamber for separating carbon dioxide produced in the reaction chamber; wherein the hydrogen gas in the hydrogen gas separation chamber has a chemical potential less than that of the hydrogen gas in the reaction chamber under a chemical equilibrium state of the methane reforming reaction; and the carbon dioxide in the carbon dioxide separation chamber has a chemical potential less than that of the carbon dioxide in the reaction chamber under the chemical equilibrium state of the methane reforming reaction.

According to an embodiment of the present disclosure, the first outlet and the second outlet are arranged to face different directions.

According to an embodiment of the present disclosure, the first outlet is connected to a first vacuum pump; and the second outlet is connected to a second vacuum pump.

According to an embodiment of the present disclosure, the first outlet is connected to an external heat supply device to provide heat to the external heat supply device by combusting the hydrogen gas in the hydrogen gas separation chamber.

According to an embodiment of the present disclosure, both the hydrogen gas separation chamber and the carbon dioxide separation chamber are connected to an inert gas input device.

According to an embodiment of the present disclosure, the hydrogen permeable membrane is provided with a first electric potential at a side close to the hydrogen gas separation chamber, and the hydrogen permeable membrane is provided with a second electric potential at a side close to the reaction chamber; the carbon dioxide permeable membrane is provided with a third electric potential at a side close to the carbon dioxide separation chamber; and the carbon dioxide permeable membrane is provided with a fourth electric potential at a side close to the reaction chamber; wherein the first electric potential is less than the second electric potential; and the third electric potential is less than the fourth electric potential.

According to an embodiment of the present disclosure, a difference ΔV1 between the second electric potential and the first electric potential has a value in a range of $0 V < \Delta V1 \leq 500 V$; and a difference ΔV2 between the fourth electric potential and the third electric potential has a value in a range of $0 V < \Delta V2 \leq 500 V$

According to an embodiment of the present disclosure, a hydrogen gas adsorbing material is provided in the hydrogen gas separation chamber, and a carbon dioxide adsorbing material is provided in the carbon dioxide separation chamber.

According to an embodiment of the present disclosure, the hydrogen gas adsorbing material comprises at least one of activated carbon, graphite nanofibers, and carbon nanotubes; and the carbon dioxide adsorbing material comprises at least one of hydrotalcite and a lithium hydroxide adsorbent.

According to an embodiment of the present disclosure, the hydrogen permeable membrane comprises at least one of: $ZrO_2$-$TiO_2$-$Y_2O_3$; palladium; $SrCe_xTm_{1-x}O_{3-\delta}$ where $0 \leq x \leq 1$ and $0 \leq \delta < 3$; and $SrCe_yYb_{1-y}O_{3-\alpha}$ where $0 \leq y \leq 1$ and $0 \leq \alpha < 3$.

According to an embodiment of the present disclosure, the carbon dioxide permeable membrane comprises at least one of a poly(4-methyl-1-pentene) membrane, a poly(4-methyl-1-pentene) membrane, and a carbonate membrane.

According to an embodiment of the present disclosure, the reaction system further comprises a thermal energy supply device for providing energy to the methane reforming reaction in the reaction chamber, wherein the thermal energy of the thermal energy supply device comprises any one of solar energy, nuclear energy and industrial waste heat.

According to an embodiment of the present disclosure, a hydrogen permeable membrane is provided between the reaction chamber and the hydrogen gas separation chamber, and a carbon dioxide permeable membrane is provided between the reaction chamber and the carbon dioxide separation chamber. Through the technical means that the chemical potentials of the gases in the hydrogen gas separation chamber and the carbon dioxide separation chamber are less than the chemical potential of the gas produced in the reaction chamber, simultaneous separation of hydrogen gas and carbon dioxide produced in the reaction chamber is achieved, facilitating the forward progress of the methane reforming reaction, reducing the thermal loss of the high temperature reactive gases of methane and steam, and increasing the methane conversion. Meanwhile, high purity hydrogen gas and high purity carbon dioxide are produced through membrane separation, avoiding carbon monoxide residues caused by industrial production, which is of significant importance in terms of energy and power, medicine, chemical engineering and the like.

## BRIEF DESCRIPTION OF THE DRAWINGS

Fig. 1 illustrates a schematic diagram of the sectional structure of a reaction system according to an embodiment of the present disclosure.
Fig. 2 illustrates the temperature versus gas osmotic pressure at 100% methane conversion in the reaction system according to an embodiment of the present disclosure.
Figs. 3a-3c illustrates schematic diagrams of a methane reforming reaction with a single product ($H_2$) separated in the related technologies.
Figs. 4a-4c illustrates schematic diagrams of a methane reforming reaction with multiple products ($H_2$ and $CO_2$) separated according to an embodiment of the present disclosure.

Reference Number List:

1: the reaction chamber; 2: the hydrogen gas separation chamber; 3: the carbon dioxide separation chamber; 4: the hydrogen permeable membrane; 5: the carbon dioxide permeable membrane; 6: the first outlet; 7: the second outlet.

## DETAILED DESCRIPTION OF THE INVENTION

The implementations of the present disclosure will be further described below with reference to the drawings.
The chemical reaction formula of the methane reforming reaction is as shown in Formula (I):

$$CH_4 + 2H_2O = 4H_2 + CO_2 \qquad (I)$$

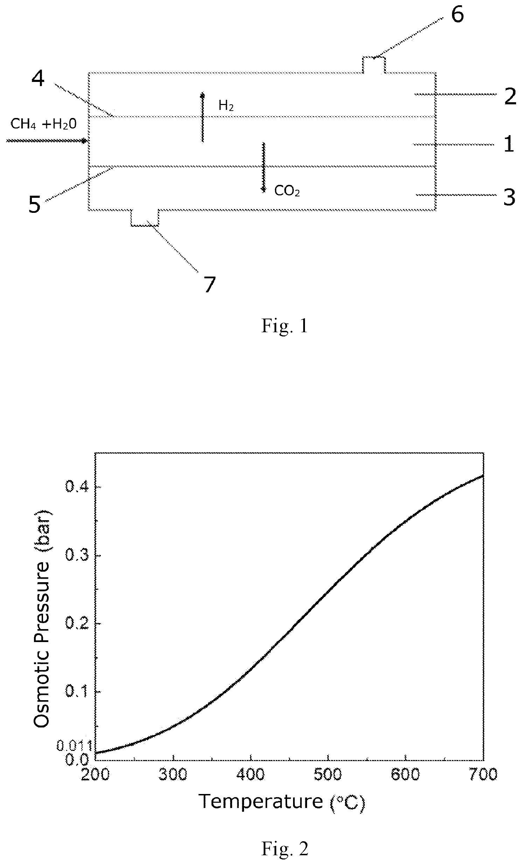

Fig. 1 illustrates a schematic diagram of the sectional structure of a reaction system according to an embodiment of the present disclosure.

As shown in Fig. 1, in an aspect, the present disclosure provides a methane reforming reaction system comprising: a reaction chamber 1, a hydrogen gas separation chamber 2 and a carbon dioxide separation chamber 3. The reaction chamber 1 is used for a methane reforming reaction between methane and steam; a hydrogen permeable membrane 4 is provided between the hydrogen gas separation chamber 2 and the reaction chamber 1, and a first outlet 6 is provided on the hydrogen gas separation chamber 2 for separating hydrogen gas produced in the reaction chamber 1; a carbon dioxide permeable membrane 5 is provided between the carbon dioxide separation chamber 3 and the reaction chamber 1, and a second outlet 7 is provided on the carbon dioxide separation chamber 3 for separating carbon dioxide produced in the reaction chamber 1; wherein the hydrogen gas in the hydrogen gas separation chamber 2 has a chemical potential less than that of the hydrogen gas in the reaction chamber 1 under a chemical equilibrium state of the methane reforming reaction; and the carbon dioxide in the carbon dioxide separation chamber 3 has a chemical potential less than that of the carbon dioxide in the reaction chamber 1 under the chemical equilibrium state of the methane reforming reaction.

According to an embodiment of the present disclosure, the reaction chamber, the hydrogen gas separation chamber, and the carbon dioxide separation chamber may all be configured to have a rectangular shape. The hydrogen gas separation chamber may be disposed above or below the reaction chamber. The carbon dioxide separation chamber may be disposed above or below the reaction chamber. Methane and steam enter into the reaction chamber from the left side. With the progress of the methane reforming reaction, the hydrogen gas produced passes through the hydrogen permeable membrane and enters into the hydrogen gas separation chamber, and the carbon dioxide produced passes through the carbon dioxide permeable membrane and enters into the carbon dioxide separation chamber. With the separation of the products, the forward progress of the methane reforming reaction is continuously facilitated.

According to an embodiment of the present disclosure, as shown in Fig. 2, the reaction chamber may also be configured to have a double layer cylinder shape, wherein the inner cylinder is configured for a methane reforming reaction between methane and steam, a hydrogen permeable membrane is provided on a portion of the tube wall of the inner cylinder, a carbon dioxide permeable membrane is provided on another portion, and a space between the inner cylinder and the outer cylinder is used as a separation chamber, wherein an area between the outer cylinder and the inner cylinder provided with the hydrogen permeable membrane is configured as a hydrogen gas separation chamber, an area between the outer cylinder and the inner cylinder provided with the carbon dioxide permeable membrane is configured as a carbon dioxide separation chamber, and a separator may be provided between the hydrogen gas separation chamber and the carbon dioxide separation chamber.

According to an embodiment of the present disclosure, a hydrogen permeable membrane is provided between the reaction chamber and the hydrogen gas separation chamber, and a carbon dioxide permeable membrane is provided between the reaction chamber and the carbon dioxide separation chamber. Through the technical means that the chemical potentials of the gases in the hydrogen gas separation chamber and the carbon dioxide separation chamber are less than the chemical potential of the gas produced in the reaction chamber, simultaneous separation of hydrogen gas and carbon dioxide produced in the reaction chamber is achieved, facilitating the forward progress of the methane reforming reaction, reducing the thermal loss of the high temperature reactive gases of methane and steam, and increasing the methane conversion.

According to an embodiment of the present disclosure, the methane reforming reaction system separate the products of hydrogen gas and carbon dioxide simultaneously, such that the reaction system device has an increased specific surface area, saving more space, and is convenient to arrange, and may efficiently absorb heat, reducing the thermal loss of the device.

According to an embodiment of the present disclosure, the first outlet and the second outlet are arranged to face different directions.

According to an embodiment of the present disclosure, the first outlet may be disposed at the front end of the hydrogen gas separation chamber, and in this case, the second outlet may be disposed at the back end of the carbon dioxide separation chamber. The first outlet may also be disposed at the back end of the hydrogen gas separation chamber, and in this case, the second outlet may be disposed at the front end of the carbon dioxide separation chamber.

According to an embodiment of the present disclosure, the gas outlet of the hydrogen gas separation chamber and the gas outlet of the carbon dioxide separation chamber are disposed in different directions, which may prevent the blending of hydrogen gas and carbon dioxide during output.

According to an embodiment of the present disclosure, the first outlet is connected to a first vacuum pump; and the second outlet is connected to a second vacuum pump.

According to an embodiment of the present disclosure, the first outlet is connected to a first vacuum pump. Through the first vacuum pump, the hydrogen partial pressure in the hydrogen gas separation chamber is lower than the hydrogen partial pressure in the reaction chamber when the methane reforming reaction reaches a chemical equilibrium at the operating temperature, such that the hydrogen gas in the hydrogen gas separation chamber has a chemical potential less than that of the hydrogen gas in the reaction chamber. The second outlet is connected to a second vacuum pump. Through the second vacuum pump, the carbon dioxide partial pressure in the carbon dioxide separation chamber is lower than the carbon dioxide partial pressure in the reaction chamber when the methane reforming reaction reaches a chemical equilibrium at the operating temperature, such that the carbon dioxide in the carbon dioxide separation chamber has a chemical potential less than that of the carbon dioxide in the reaction chamber.

According to an embodiment of the present disclosure, the hydrogen partial pressure in the hydrogen gas separation chamber and the carbon dioxide partial pressure in the carbon dioxide separation chamber may be controlled at 0.15 bar or less. As compared to the related technologies where it is necessary to control the hydrogen partial pressure in the hydrogen gas separation chamber at $10^{-3}$ bar or less for the single separation of hydrogen gas or asynchronous separation of hydrogen gas, the energy consumption of the vacuum pump is lower in the reaction system provided in the embodiment of the present disclosure.

According to an embodiment of the present disclosure, by connecting vacuum pumps respectively at the gas outlets of the hydrogen gas separation chamber and the carbon dioxide separation chamber, the partial pressures of respective gases in the hydrogen gas separation chamber and the carbon dioxide separation chamber are reduced, which facilitates the hydrogen gas produced in the reaction chamber passing through the hydrogen permeable membrane and entering into the hydrogen gas separation chamber and the carbon dioxide passing through the carbon dioxide permeable membrane and entering into the carbon dioxide separation chamber, thereby achieving the purpose of synchronous separation of hydrogen gas and carbon dioxide.

According to an embodiment of the present disclosure, the first outlet is connected to an external heat supply device to provide heat to the external heat supply device by combusting the hydrogen gas in the hydrogen gas separation chamber.

According to an embodiment of the present disclosure, oxygen gas may be used as an oxidative gas. Due to high selectivity of the hydrogen permeable membrane, the hydrogen gas in the hydrogen gas separation chamber has a high purity and may be directly used in industrial applications. The hydrogen gas in the hydrogen gas separation chamber is directly input into the external heat supply device via the first outlet. The external heat supply device is connected to an oxidative gas input device, and the oxidative gas may be oxygen gas. By combusting hydrogen gas and oxygen gas in the hydrogen gas separation chamber, on one hand, the chemical potential of the hydrogen gas in the hydrogen gas separation chamber may be reduced, and on the other hand, heat may be provided to the external heat supply device.

According to an embodiment of the present disclosure, both the hydrogen gas separation chamber and the carbon dioxide separation chamber are connected to an inert gas input device.

According to an embodiment of the present disclosure, the inert gas may comprise helium or argon. By introducing an inert gas into the hydrogen gas separation chamber, the partial pressure of the hydrogen gas in the hydrogen gas separation chamber may be reduced, thereby reducing the chemical potential of the hydrogen gas in the hydrogen gas separation chamber. Introducing an inert gas into the carbon dioxide separation chamber reduces the chemical potential of the carbon dioxide in the carbon dioxide separation chamber, which facilitates the hydrogen gas and the carbon dioxide produced in the reaction chamber entering into the hydrogen gas separation chamber and the carbon dioxide separation chamber respectively, thereby achieving the purpose of synchronous separation.

According to an embodiment of the present disclosure, the hydrogen permeable membrane is provided with a first electric potential at a side close to the hydrogen gas separation chamber, and the hydrogen permeable membrane is provided with a second electric potential at a side close to the reaction chamber; the carbon dioxide permeable membrane is provided with a third electric potential at a side close to the carbon dioxide separation chamber; and the carbon dioxide permeable membrane is provided with a fourth electric potential at a side close to the reaction chamber; wherein the first electric potential is less than the second electric potential; and the third electric potential is less than the fourth electric potential.

According to an embodiment of the present disclosure, by applying different electric potentials respectively at two sides of the hydrogen permeable membrane and two sides of the carbon dioxide permeable membrane, there are electric potential differences between the two sides of the hydrogen permeable membrane and between the two sides of the carbon dioxide permeable membrane, such that chemical potential differences will be generated between the hydrogen gas separation chamber and the reaction chamber, and between the carbon dioxide separation chamber and the reaction chamber, so as to achieve the purpose of synchronous separation of hydrogen gas and carbon dioxide.

According to an embodiment of the present disclosure, a difference $\Delta V1$ between the second electric potential and the first electric potential has a value in a range of $0\text{ V} < \Delta V1 \leq 500\text{ V}$; and a difference $\Delta V2$ between the fourth electric potential and the third electric potential has a value in a range of $0\text{ V} < \Delta V2 \leq 500\text{ V}$

According to an embodiment of the present disclosure, the difference $\Delta V1$ between the second electric potential and the first electric potential has a value in a range of $0\text{ V} < \Delta V1 \leq 500\text{ V}$, for example, 10 V, 200 V, 350 V, 500 V and the like. The difference $\Delta V2$ between the fourth electric potential and the third electric potential has a value in a range of $0\text{ V} < \Delta V2 \leq 500\text{ V}$, for example, 30 V, 210 V, 320 V, 500 V and the like. Here, the difference $\Delta V1$ between the second electric potential and the first electric potential may be the same as or different from the difference $\Delta V2$ between the fourth electric potential and the third electric potential.

According to an embodiment of the present disclosure, a hydrogen gas adsorbing material is provided in the hydrogen gas separation chamber, and a carbon dioxide adsorbing material is provided in the carbon dioxide separation chamber.

According to an embodiment of the present disclosure, a hydrogen gas adsorbing material is provided in the hydrogen gas separation chamber, which may reduce the chemical potential of the hydrogen gas in the hydrogen gas separation chamber, such that the chemical potential of the hydrogen gas in the hydrogen gas separation chamber is less than the chemical potential of the hydrogen gas produced in the reaction chamber. A carbon dioxide adsorbing material is provided in the carbon dioxide separation chamber, which may reduce the chemical potential of the carbon dioxide in the carbon dioxide separation chamber, such that the chemical potential of the carbon dioxide in the carbon dioxide separation chamber is less than the chemical potential of the carbon dioxide produced in the reaction chamber, thereby achieving the purpose of synchronous separation of hydrogen gas and carbon dioxide.

According to an embodiment of the present disclosure, the hydrogen gas adsorbing material comprises at least one of activated carbon, graphite nanofibers, and carbon nanotubes; and the carbon dioxide adsorbing material comprises at least one of hydrotalcite and a lithium hydroxide adsorbent.

According to the embodiment of the present disclosure, the hydrogen gas adsorbing material includes, but not limited to, activated carbon, graphite nanofibers, and carbon nanotubes. Other materials capable of adsorbing hydrogen gas may also be applied in the present disclosure. The carbon dioxide adsorbing material includes, but not limited to, hydrotalcite and a lithium hydroxide adsorbent. Other materials capable of adsorbing carbon dioxide may also be applied in the present disclosure.

According to an embodiment of the present disclosure, the hydrogen permeable membrane comprises at least one of: $ZrO_2$-$TiO_2$-$Y_2O_3$; palladium; $SrCe_xTm_{1-x}O_{3-\delta}$ where $0 \leq x \leq 1$ and $0 \leq \delta < 3$; and $SrCe_yYb_{1-y}O_{3-\alpha}$ where $0 \leq y \leq 1$ and $0 \leq \alpha < 3$.

According to an embodiment of the present disclosure, the carbon dioxide permeable membrane comprises at least one of a polydimethylsiloxane membrane, a poly(4-methyl-1-pentene) membrane, and a carbonate membrane.

According to an embodiment of the present disclosure, the reaction system further comprises a thermal energy supply device for providing energy to the methane reforming reaction in the reaction chamber, wherein the thermal energy of the thermal energy supply device comprises any one of solar energy, nuclear energy and industrial waste heat. The thermal energy may also be provided by combusting other fuels such as methane or by electrical heating.

According to an embodiment of the present disclosure, a Fresnel solar concentrator, a dish solar concentrator or a tower solar concentrator may be used as the thermal energy supply device. The thermal energy may also be provided from nuclear energy or industrial waste heat to reduce the use of electric energy and fossil energy.

According to an embodiment of the present disclosure, the methane reforming reaction system of the present disclosure may be combined with new energy such as solar lamp, nuclear energy, or industrial waste heat, and is clean and environmental friendly.

According to an embodiment of the present disclosure, the methane reforming reaction system of the present disclosure may release thermal energy of other fuels such as methane at a greatly reduced temperature, or convert electric energy to thermal energy, thereby reducing the consumption of other fuels such a methane or electric energy.

According to an embodiment of the present disclosure, the energy efficiencies of the methane reforming reaction system with single separation of hydrogen gas, the methane reforming reaction system with asynchronous separation of hydrogen gas and carbon dioxide, and the methane reforming reaction system with synchronous separation of hydrogen gas and carbon dioxide may be respectively calculated according to the Efficiency Equation (II).

$$\eta = \frac{n_{H_2} \times HHV_{H_2} - n_{CH_4} \times HHV_{CH_4}}{\left(Q_{heat} + \Delta H\right)/\eta_{abs} + W_{sep}/\eta_{pump}/15\%} \qquad (II);$$

wherein $\eta_{pump}$ is the efficiency of the vacuum pump, $W_{sep}$ is the minimum separation work, and $Q_{heat}$ and $\Delta H$ are the energy required for preheating the reactants and the reaction enthalpy change respectively.

Fig. 2 illustrates the temperature versus gas osmotic pressure at 100% methane conversion in the reaction system according to an embodiment of the present disclosure.

As shown in Fig. 2, for the methane reforming reaction at 600°C, in the methane reforming reaction system with synchronous separation of hydrogen gas and carbon dioxide, as long as the pressures in the hydrogen gas separation chamber and the carbon dioxide separation chamber reach 0.35 bar, the methane conversion may reach 100%, and the energy efficiency of the system may reach 56.4%.

For the methane reforming reaction at 600°C, in the methane reforming reaction system with single separation of hydrogen gas, when the pressure in the hydrogen gas separation chamber reaches 0.225 bar, the methane conversion may reach 96.6%, and the energy efficiency of the system may reach 40.7%.

In the methane reforming reaction system with asynchronous separation of hydrogen gas and carbon dioxide, as the individual products are separated, the partial pressure within the reactor decreases. When the partial pressures on the inside and outside of the membrane are consistent, the conversion rate no longer increases. Therefore, in the methane reforming reaction system with asynchronous separation of hydrogen gas and carbon dioxide, the pressures in the hydrogen gas separation chamber and carbon dioxide separation chamber should be lower than 0.35bar to achieve 100% methane conversion rate. However, due to the excessive energy consumption of the vacuum pump, the energy efficiency of the system is reduced.

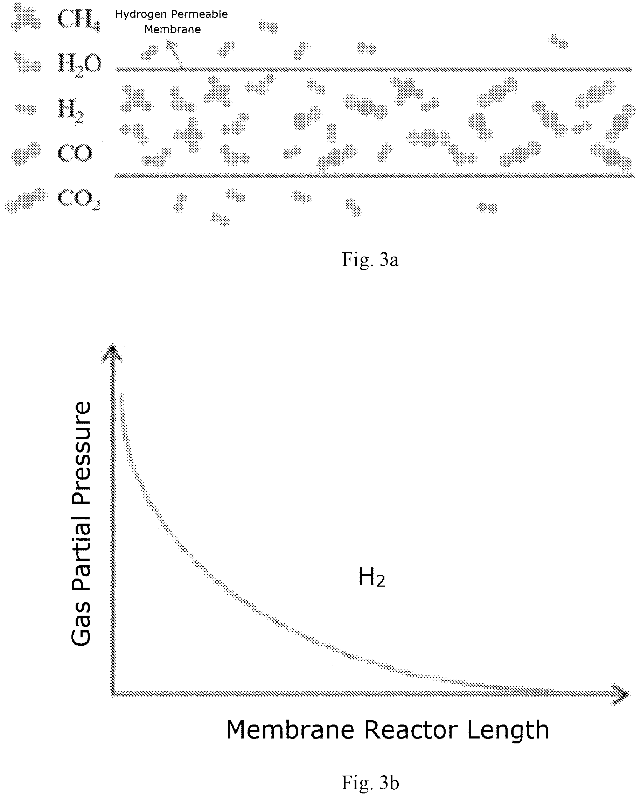

Figs. 3a-3c illustrates schematic diagrams of a methane reforming reaction with a single product ($H_2$) separated in the related technologies.

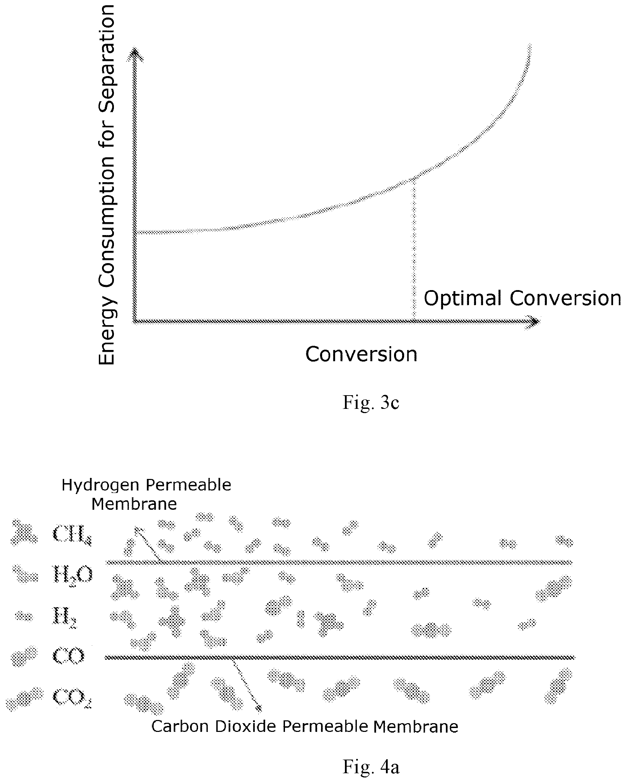

As shown in Fig. 3a, in the methane reforming reaction system with single separation of hydrogen gas, only $H_2$ is separated, and a large amount of $CO_2$ will remain in the system. As shown in Fig. 3b, with increased length of the membrane reactor, the gas partial pressure of $H_2$ will gradually decrease. As shown in Fig. 3c, because the gas partial pressure of $H_2$ gradually decreases, if the conversion is to be increased, the energy consumption for separation will increase accordingly.

Figs. 4a-4c illustrates schematic diagrams of a methane reforming reaction with multiple products ($H_2$ and $CO_2$) separated according to an embodiment of the present disclosure.

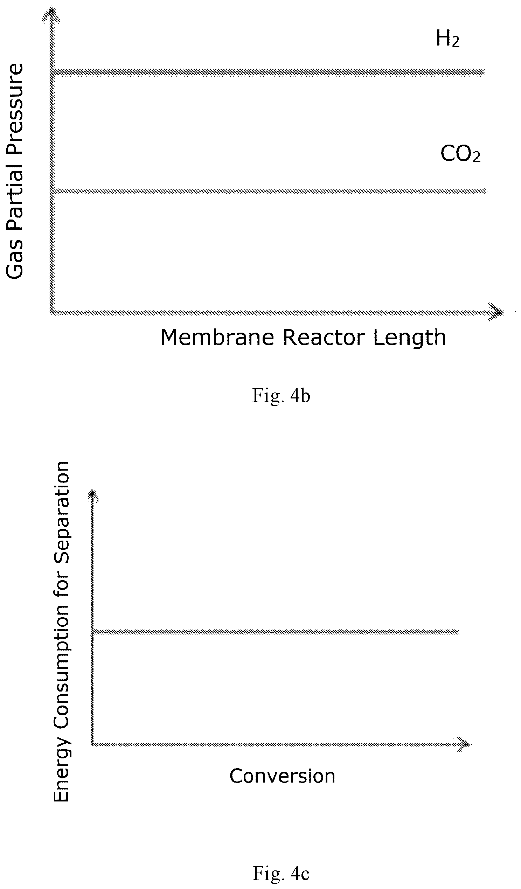

As shown in Fig. 4a, in the methane reforming reaction system with simultaneous separation of multiple products, $H_2$ and $CO_2$ are separated out at the same time. As shown in Fig. 4b, because $H_2$ and $CO_2$ are separated at the same time, with increased length of the membrane reactor, the gas partial pressures of $H_2$ and $CO_2$ remain constant. As shown in Fig. 4c, because the gas partial pressures of $H_2$ and $CO_2$ remain constant, with increased conversion, the energy consumption for separation remains constant.

In summary, the methane reforming reaction system with simultaneous separation of multiple products according to the embodiments of the present disclosure has a low energy consumption while achieving 100% conversion for the methane reforming reaction.

The particular embodiments of the present disclosure above will not limit the protection scope of the present disclosure. Any of various modifications and variations made according to the technical concept of the present disclosure should be encompassed within the protection scopes of the appended claims of the present disclosure.

**Claims**

1. A methane reforming reaction system comprising a reaction chamber, a hydrogen gas separation chamber and a carbon dioxide separation chamber, wherein:

   the reaction chamber is used for a methane reforming reaction between methane and steam;
   a hydrogen permeable membrane is provided between the hydrogen gas separation chamber and the reaction chamber, and a first outlet is provided on the hydrogen gas separation chamber for separating hydrogen gas produced in the reaction chamber;
   a carbon dioxide permeable membrane is provided between the carbon dioxide separation chamber and the reaction chamber, and a second outlet is provided on the carbon dioxide separation chamber for separating carbon dioxide produced in the reaction chamber;
   wherein the hydrogen gas in the hydrogen gas separation chamber has a chemical potential less than that of the hydrogen gas in the reaction chamber under a chemical equilibrium state of the methane reforming reaction; and the carbon dioxide in the carbon dioxide separation chamber has a chemical potential less than that of the carbon dioxide in the reaction chamber under the chemical equilibrium state of the methane reforming reaction.

2. The reaction system according to claim 1, wherein the first outlet and the second outlet are arranged to face different directions.

3. The reaction system according to claim 2, wherein the first outlet is connected to a first vacuum pump; and the second outlet is connected to a second vacuum pump.

4. The reaction system according to claim 2, wherein the first outlet is connected to an external heat supply device to provide heat to the external heat supply device by combusting the hydrogen gas in the hydrogen gas separation chamber.

5. The reaction system according to claim 2, wherein both the hydrogen gas separation chamber and the carbon dioxide separation chamber are connected to an inert gas input device.

6.  The reaction system according to claim 1, wherein the hydrogen permeable membrane is provided with a first electric potential at a side close to the hydrogen gas separation chamber, and the hydrogen permeable membrane is provided with a second electric potential at a side close to the reaction chamber; and

    the carbon dioxide permeable membrane is provided with a third electric potential at a side close to the carbon dioxide separation chamber; and the carbon dioxide permeable membrane is provided with a fourth electric potential at a side close to the reaction chamber;
    wherein the first electric potential is less than the second electric potential; and the third electric potential is less than the fourth electric potential.

7.  The reaction system according to claim 6, wherein a difference $\Delta V1$ between the second electric potential and the first electric potential has a value in a range of $0\,V < \Delta V1 \leq 500\,V$; and a difference $\Delta V2$ between the fourth electric potential and the third electric potential has a value in a range of $0\,V < \Delta V2 \leq 500\,V$

8.  The reaction system according to claim 1, wherein a hydrogen gas adsorbing material is provided in the hydrogen gas separation chamber, and a carbon dioxide adsorbing material is provided in the carbon dioxide separation chamber.

9.  The reaction system according to claim 8, wherein:

    the hydrogen gas adsorbing material comprises at least one of activated carbon, graphite nanofibers, and carbon nanotubes; and
    the carbon dioxide adsorbing material comprises at least one of hydrotalcite and a lithium hydroxide adsorbent.

10. The reaction system according to claim 1, wherein the hydrogen permeable membrane comprises at least one of: $ZrO_2\text{-}TiO_2\text{-}Y_2O_3$; palladium;

    $SrCe_xTm_{1-x}O_{3-\delta}$ where $0 \leq x \leq 1$ and $0 \leq \delta < 3$; and
    $SrCe_yYb_{1-y}O_{3-\alpha}$ where $0 \leq y \leq 1$ and $0 \leq \alpha < 3$.

11. The reaction system according to claim 1, wherein the carbon dioxide permeable membrane comprises at least one of: a polydimethylsiloxane membrane, a poly(4-methyl-1-pentene) membrane, and a carbonate membrane.

12. The reaction system according to any one of claims 1 to 11, further comprising:
    a thermal energy supply device for providing energy to the methane reforming reaction in the reaction chamber, wherein the thermal energy of the thermal energy supply device comprises any one of solar energy, nuclear energy and industrial waste heat.

Fig. 1

Fig. 2

CH$_4$

H$_2$O

H$_2$

CO

CO$_2$

Hydrogen Permeable Membrane

Fig. 3a

H$_2$

Gas Partial Pressure

Membrane Reactor Length

Fig. 3b

Fig. 3c

Hydrogen Permeable Membrane

$CH_4$

$H_2O$

$H_2$

$CO$

$CO_2$

Carbon Dioxide Permeable Membrane

Fig. 4a

Fig. 4b

Fig. 4c

<div align="center">

**INTERNATIONAL SEARCH REPORT**

</div>

| International application No. |
|---|
| **PCT/CN2023/070442** |

| A. | CLASSIFICATION OF SUBJECT MATTER |
|---|---|

C01B3/56(2006.01)i;C01B3/34(2006.01)i

According to International Patent Classification (IPC) or to both national classification and IPC

| B. | FIELDS SEARCHED |
|---|---|

Minimum documentation searched (classification system followed by classification symbols)

IPC: C01B

Documentation searched other than minimum documentation to the extent that such documents are included in the fields searched

Electronic data base consulted during the international search (name of data base and, where practicable, search terms used)

CNTXT, ENTXTC, ENTXT, VEN, CNKI, ISI Web of Science: 甲烷, 二氧化碳, 氢气, 膜, 透氢膜, 透二氧化碳膜, 化学势, CH4, CO2, H2, methane, carbon dioxide, membrane, film, chemical potential.

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114314510 A (INSTITUTE OF ENGINEERING THERMOPHYSICS, CHINESE ACADEMY OF SCIENCES) 12 April 2022 (2022-04-12)<br>claims 1-12 | 1-12 |
| Y | CN 105776133 A (INSTITUTE OF ENGINEERING THERMOPHYSICS, CHINESE ACADEMY OF SCIENCES) 20 July 2016 (2016-07-20)<br>description, paragraphs 25-46, and figure 1 | 1-12 |
| Y | CN 104192795 A (INSTITUTE OF ENGINEERING THERMOPHYSICS, CHINESE ACADEMY OF SCIENCES) 10 December 2014 (2014-12-10)<br>description, paragraphs 26-30 and 54-56, and figure 1 | 1-12 |
| Y | US 2004098914 A1 (THE UNIVERSITY OF CHICAGO) 27 May 2004 (2004-05-27)<br>description, paragraph 35, and figures 1-4 | 1-12 |
| A | CN 109573945 A (GUANGZHOU INSTITUTE OF ENERGY CONVERSION, CHINESE ACADEMY OF SCIENCES) 05 April 2019 (2019-04-05)<br>entire document | 1-12 |
| A | WO 2020138817 A1 (KEUM KANG C.N.T., LTD.) 02 July 2020 (2020-07-02)<br>entire document | 1-12 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 March 2023** | **14 March 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2023/070442**

| Patent document cited in search report | | | Publication date (day/month/year) | Patent family member(s) | | | Publication date (day/month/year) |
|---|---|---|---|---|---|---|---|
| CN | 114314510 | A | 12 April 2022 | None | | | |
| CN | 105776133 | A | 20 July 2016 | CN | 105776133 | B | 17 November 2017 |
| CN | 104192795 | A | 10 December 2014 | None | | | |
| US | 2004098914 | A1 | 27 May 2004 | US | 7087211 | B2 | 08 August 2006 |
| CN | 109573945 | A | 05 April 2019 | CN | 109573945 | B | 28 August 2020 |
| WO | 2020138817 | A1 | 02 July 2020 | KR | 20200084068 | A | 10 July 2020 |

Form PCT/ISA/210 (patent family annex) (July 2022)